Europäisches Patentamt

European Patent Office

Office européen des brevets

(19)

(11) **EP 1 367 067 A1**

(12) # EUROPEAN PATENT APPLICATION

(43) Date of publication:
**03.12.2003 Bulletin 2003/49**

(51) Int Cl.7: **C08F 8/12**, G02B 1/04

(21) Application number: **03253212.9**

(22) Date of filing: **22.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.05.2002 JP 2002151854
11.07.2002 JP 2002202968**

(71) Applicant: **Menicon Co., Ltd.
Nagoya-shi Aichi-ken (JP)**

(72) Inventor: **Ichihara, Masuji, c/o Menicon Co.
Kasugai-shi, Aichi-ken (JP)**

(74) Representative: **Paget, Hugh Charles Edward et al
MEWBURN ELLIS
York House
23 Kingsway
London WC2B 6HP (GB)**

(54) **Highly water-absorptive ophthalmic lens and method of producing the same**

(57) A highly water-absorptive ophthalmic lens which is formed of a macromolecular material including vinyl alcohol unit as a major component and whose water content is in a range of 50-90 %, characterized in that: the macromolecular material is a cross-linked vinyl alcohol-allyl alcohol/halogenated-alkyl ethylene copolymer which includes allyl alcohol unit and/or halogenated-alkyl ethylene unit, together with the vinyl alcohol unit; and the ophthalmic lens has a ratio of a dimensional change of less than ±2 % and being free from whitening after (A) the ophthalmic lens has been subjected to three cycles of a freezing-thawing operation wherein the ophthalmic lens formed of the macromolecular material is left at a temperature of not higher than -10°C for not less than twelve hours, and is subsequently left at a temperature in a range from 15°C to 30°C for not less than six hours, and/or (B) the ophthalmic lens has been kept at a temperature in a range from 1°C to 9°C for three months.

EP 1 367 067 A1

**Description**

BACKGROUND OF THE INVENTION

Field of the Invention

The present invention relates to a highly water-absorptive ophthalmic lens and a method of producing the same. More particularly, the present invention relates to such a highly water-absorptive ophthalmic lens which exhibits a high degree of dimensional stability and is free from whitening or clouding even after the ophthalmic lens has been repeatedly frozen and thawed or the ophthalmic lens has been exposed to a low temperature of about 5 ° C for a long period, and which has a desired water content and a sufficient strength. The present invention also relates to an advantageous method of producing such a highly water-absorptive ophthalmic lens.

Discussion of Related Art

As well known, a contact lens is classified into a soft contact lens and a hard contact lens. Both of the soft and hard contact lenses are needed to have a high degree of permeability to oxygen, so that a sufficient amount of oxygen is supplied to a cornea of an eye on which the contact lens is worn.

The oxygen permeability largely depends on a degree of dissolution of oxygen into a lens material and a degree of mobility or diffusion of oxygen into the lens material. Accordingly, the contact lens which exhibits high degrees of dissolution and diffusion of oxygen into its material exhibits a high degree of oxygen permeability. In a soft contact lens except the one formed of a silicone material, the oxygen passes through the lens and is supplied to the cornea by a movement of the oxygen dissolved in water contained in the lens. Accordingly, the soft contact lens having a higher water content exhibits a higher degree oxygen permeability.

In a hard contact lens, on the other hand, the oxygen is supplied to the cornea such that the oxygen passes intermolecular spaces or gaps within the lens material. The oxygen permeability of the hard contact lens is improved by increasing the size of the intermolecular spaces or gaps within the lens material, or employing, for the lens material, a component which has a high degree of affinity for the oxygen. In recent years, however, there have been increasing demands for a soft contact lens which assures a lens user of an excellent wearing comfort, especially a disposable soft contact lens, in view of a fact that a lens user feels an acute pain in his/her eye if foreign matters get into the eye on which the hard contact lens is worn. Thus, it has been particularly desired to provide a highly water-absorptive soft contact lens having an excellent oxygen permeability.

A cross-linked polyvinyl alcohol or copolymer including vinyl alcohol unit as a major component is considered to be a material suitable for a contact lens, for the following reasons: The cross-linked polyvinyl alcohol or copolymer has a high water content, and its alcoholic OH group is neutral and nonionic, unlike an unsaturated amide such as N-vinylpyrrolidone is basic. Various kinds of the cross-linked polyvinyl alcohol or copolymer have been proposed.

For instance, JP-A-52-65597 discloses a polyvinyl alcohol based high-molecular material obtained by saponification of a copolymer of vinyl ester and ethylenically unsaturated carboxylic acid or its derivatives. Where a contact lens is formed of such a polyvinyl alcohol based high-molecular material, the contact lens is likely to be soiled since cations such as calcium and stains such as protein tend to adhere to anions of carboxylic acid portions of the material.

JP-A-62-21101, JP-A-2-15233, JP-A-7-49470, and JP-A-6-102472 disclose a cross-linked polyvinyl alcohol or copolymer obtained by saponification of a copolymer of vinyl ester of fatty acid as a major component and (meth) acrylate polymer having at least one polymerizable group per molecule on an average. JP-A-9-40719, JP-A-9-40720, JP-A-11-133202, JP-A-11-153775, and JP-A-11-153776 disclose a cross-linked polyvinyl alcohol or copolymer obtained by saponification of a copolymer of vinyl ester such as vinyl acetate and various kinds of crosslinking monomers.

Where a contact lens having an intended high water content is formed of the cross-linked polyvinyl alcohol or copolymers described above, the contact lens may suffer from serious troubles such as a reduction in its size and whitening or clouding phenomenon after the contact lens has been exposed to a low temperature of about 5°C or the contact lens has been repeatedly frozen and thawed. It is speculated that the reduction of the size and the whitening phenomenon of the contact lens are caused by crystallization of the polyvinyl alcohol chain. Accordingly, it has been revealed that the contact lens formed of the conventional cross-linked polyvinyl alcohol copolymers cannot be used in a winter season.

In an attempt to prevent the crystallization of the polyvinyl alcohol chain, JP-A-6-102471 discloses a water-absorptive contact lens formed of a polyvinyl alcohol material wherein maleate or N-vinyl lactam is contained as one polymerizable component, for preventing the change of the size of the contact lens by giving anti-freezing property to the material so as to prevent the crystallization of the polyvinyl alcohol chain. The disclosed contact lens exhibits a high degree of anti-freezing property. In the contact lens wherein the maleate is used as the copolymerizable component, however, the ester unit of the maleate is hydrolyzed by saponification carried out after copolymerization, so that the carboxylic acid is present in the polymer chain. Like the contact lens disclosed in JP-A-52-65597 described above, the contact lens disclosed in JP-A-6-102471 is negatively charged, so that positively charged calcium ions and protein stains undesirably tend to adhere to the contact lens. Moreover, the contact lens has a significantly low strength, and is not suitable for practical use.

SUMMARY OF THE INVENTION

The present invention has been developed in the background art situations described above. It is therefore a first object of the invention to provide a highly water-absorptive ophthalmic lens which exhibits excellent dimensional stability and is free from whitening or clouding after the ophthalmic lens has been repeatedly frozen and thawed or the ophthalmic lens has been exposed to a low temperature of about 5°C for a long time period, and an advantageous method of producing such a highly water-absorptive ophthalmic lens.

It is a second object of the present invention to provide an ophthalmic lens which exhibits a high degree of anti-staining property by rendering the material of the lens nonionic to prevent generation of anions and cations.

It is a third object of the present invention to provide an ophthalmic lens having a practically satisfactory degree of strength.

It is a fourth object of the present invention to provide an ophthalmic lens having a desired water content with high stability.

As a result of an extensive study by the inventor of the present invention, it has been found that the problem of crystallization experienced in the conventional cross-linked polyvinyl alcohol material whose major component is the vinyl alcohol unit is advantageously eliminated or avoided, by introducing, into the copolymer, allyl alcohol unit having carbon atoms whose number is different by one from that of the vinyl alcohol unit. Accordingly, it has been found that the cross-linked polyvinyl alcohol material into which the allyl alcohol is introduced provides a highly water-absorptive ophthalmic lens which exhibits excellent dimensional stability and is free from whitening phenomenon even after the ophthalmic lens has been repeatedly frozen and thawed or the ophthalmic lens has been exposed to a low temperature of about 5 °C for a long time period.

The inventor has also found that the water content of the ophthalmic lens formed of the conventional cross-linked polyvinyl alcohol material can be easily adjusted with high stability and the strength of the ophthalmic lens can be improved, by introducing halogenated-alkyl ethylene unit into the copolymer.

The present invention has been developed based on the findings described above, and the above-indicated objects of the invention may be achieved according to a principle of the invention which provides a highly water-absorptive ophthalmic lens which is formed of a macromolecular material including vinyl alcohol unit as a major component and whose water content is in a range of 50-90 %, wherein: the macromolecular material is a cross-linked vinyl alcohol-allyl alcohol/halogenated-alkyl ethylene copolymer which includes allyl alcohol unit and/or halogenated-alkyl ethylene unit, together with the vinyl alcohol unit; and the ophthalmic lens has a ratio of a dimensional change of less than $\pm 2$ % and being free from whitening after (A) the ophthalmic lens has been subjected to three cycles of a freezing-thawing operation wherein the ophthalmic lens formed of the macromolecular material is left at a temperature of not higher than -10 °C for not less than twelve hours, and is subsequently left at a temperature in a range from 15 °C to 30 °C for not less than six hours, and/or (B) the ophthalmic lens has been kept at a temperature in a range from 1 °C to 9 °C for three months.

Where the cross-linked vinyl alcohol-allyl alcohol/halogenated-alkyl ethylene copolymer includes, as essential components, the vinyl alcohol unit and the allyl alcohol unit which has a structure slightly different from that of the vinyl alcohol unit (this copolymer is hereinafter referred to as "cross-linked vinyl alcohol-allyl alcohol copolymer"), the ophthalmic lens formed of such a cross-linked vinyl alcohol-allyl alcohol copolymer has a high water content of 50-90% owing to hydroxyl groups of the vinyl alcohol unit and the allyl alcohol unit. Further, the conventionally experienced problem of crystallization is advantageously eliminated or avoided owing to the slight difference in the structure of the two monomer units although its mechanism is not clear. Therefore, the highly water-absorptive ophthalmic lens formed of the cross-linked vinyl alcohol-allyl alcohol copolymer is free from serious troubles such as the reduction of the size and the whitening phenomenon even after the ophthalmic lens has been repeatedly frozen and thawed or the ophthalmic lens has been exposed to a low temperature of about 5 °C for a long time period. Therefore, the obtained highly water-absorptive ophthalmic lens exhibits excellent dimensional stability and transparency.

Like the vinyl alcohol unit, the allyl alcohol unit of the copolymer includes only alcoholic OH groups. Accordingly, the ophthalmic lens formed of the copolymer is nonionic under ordinary wearing conditions of the lens, i.e., in an almost neutral state of the lens, so that negatively charged deposits as well as positively charged calcium ions and protein deposits do not adhere to the thus formed ophthalmic lens.

The highly water-absorptive ophthalmic lens formed of the cross-linked vinyl alcohol-allyl alcohol copolymer does not suffer from a reduction of its strength owing to the allyl alcohol unit introduced into the copolymer, unlike an ophthalmic lens formed of the conventional cross-linked polyvinyl alcohol material without the allyl alcohol unit. Thus, the present highly water-absorptive ophthalmic lens exhibits a sufficiently high degree of strength required by the ophthalmic lens.

Where the cross-linked vinyl alcohol-allyl alcohol/halogenated alkyl ethylene includes, as essential components, the vinyl alcohol unit and the halogenated-alkyl ethylene unit (this copolymer is hereinafter referred to as "cross-linked vinyl alcohol-halogenated-alkyl ethylene copolymer"), the water content of the ophthalmic lens formed of such a cross-linked vinyl alcohol-halogenated-alkyl ethylene copolymer can be easily adjusted with high stability and the strength of the ophthalmic lens can be sufficiently improved, owing to the halogenated-alkyl ethylene unit introduced into the copolymer.

The water content of the ophthalmic lens can be easily adjusted by introduction of the halogenated-alkyl ethylene unit, for the following reasons: The halogenated-alkyl ethylene can be easily purified by distillation, so that its purity can be made high. The halogenated-alkyl ethylene is a hydrophobic monomer different from a crosslinking monomer having at least two polymerizable groups. Accordingly, the water content of the ophthalmic lens is lowered to increase its hydrophobicity by increasing the amount of the halogenated-alkyl ethylene introduced into the copolymer, without increasing the number of crosslinking points or sites, while the water content of the ophthalmic lens is increased by decreasing the amount of the halogenated-alkyl ethylene introduced into the copolymer. Further, owing to the halogenated-alkyl ethylene, the strength of the ophthalmic lens is improved.

Moreover, the halogenated-alkyl ethylene unit introduced into the copolymer is not decomposed by saponification. Like the vinyl alcohol unit, the halogenated-alkyl ethylene unit is nonionic, so that the ophthalmic lens does not become ionic by addition of the halogenated-alkyl ethylene unit. Therefore, the negatively charged deposits as well as the positively charged calcium ions and protein deposits do not adhere to the ophthalmic lens. Thus, the ophthalmic lens exhibits excellent anti-staining property.

In one preferred form of the present invention, the macromolecular material is formed by saponifying a copolymer obtained by copolymerization of a first polymerizable monomer composition that includes, as essential components, vinyl carboxylate, allyl carboxylate, and a crosslinking monomer which is not decomposed by saponification.

In another preferred form of the present invention, the allyl carboxylate and the crosslinking monomer are included in the first polymerizable monomer composition in an amount of 0.001-0.8 mol and 0.0005-0.3 mol, respectively, per 1 mol of the vinyl carboxylate.

In still another preferred form of the present invention, the vinyl carboxylate is selected from the group consisting of mono-vinyl ester of monobasic carboxylic acid, di-vinyl ester of dibasic carboxylic acid, and mono-, di-, or poly-vinyl ester of polybasic carboxylic acid each of which has a molecular weight in a range from 86 to 1000. Preferably, the allyl carboxylate is poly-allyl ester of polybasic carboxylic acid wherein at least two carboxyl groups of polybasic carboxylic acid are esterified.

In yet another preferred form of the present invention, the first polymerizable monomer composition further includes 0.5-40 parts by weight of a lens-strength improving component for improving a strength of the ophthalmic lens, per 100 parts by weight of the total amount of the vinyl carboxylate, the allyl carboxylate, and the crosslinking monomer, the lens-strength improving component being copolymerizable with the vinyl carboxylate. By adding the lens-strength improving component described above to the copolymer, the mechanical strength of the ophthalmic lens can be further improved.

Preferably, the lens-strength improving component is a macromonomer having at least one polymerizable group per molecule on an average and obtained by copolymerizing a monomer composition that includes, as major components, alkyl (meth)acrylate monomer and a monomer having at least two polymerizable groups per molecule.

In a further preferred form of the present invention, the macromolecular material is formed by saponifying a copolymer obtained by copolymerization of a second polymerizable monomer composition that includes, as essential components, vinyl carboxylate, halogenated-alkyl ethylene, and a crosslinking monomer which is not decomposed by saponification.

In one preferred form of the present invention, the halogenated-alkyl ethylene and the crosslinking monomer are included in the second polymerizable monomer composition in an amount of 0.0001-0.5 mol and 0.0005-0.3 mol, respectively, per 1 mol of the vinyl carboxylate.

In another preferred form of the present invention, the vinyl carboxylate is selected from the group consisting of mono-vinyl ester of monobasic carboxylic acid, di-vinyl ester of dibasic carboxylic acid, and mono-, di-, or poly-vinyl ester of polybasic carboxylic acid each of which has a molecular weight in a range from 86 to 1000. Preferably, the halogenated-alkyl ethylene is perfluoroalkyl ethylene wherein all hydrogen atoms in the alkyl group thereof are substituted with fluorine atoms.

The present invention also provides a method of producing a highly water-absorptive ophthalmic lens having the characteristics described above, comprising the steps of: preparing a first polymerizable monomer composition which at least includes allyl carboxylate and a crosslinking monomer which is not decomposed by saponification, together with vinyl carboxylate; introducing the first polymerizable monomer composition into a mold cavity of a mold assembly which gives a configuration of an intended ophthalmic lens; copolymerizing the first polymerizable composition by photo-polymerization or heat-polymerization to obtain a copolymer; and saponifying the obtained copolymer, for converting vinyl carboxylate unit and allyl carboxylate unit into vinyl alcohol unit and allyl alcohol unit, respectively, so that the copolymer is made hydrophilic. According to the present method, the intended ophthalmic lens having excellent characteristics such as high degrees of dimensional stability and transparency can be advantageously produced.

In one preferred form of the above-described method of the invention, the mold assembly consists of a male mold and a female mold at least one of which is formed of a light-transmitting material, and the step of copolymerizing the first polymerizable composition is carried out by photo-polymerization of the first polymerizable composition which is introduced into the mold cavity defined by the male mold and the female mold. The present arrangement wherein the photo-polymerization is employed for copolymerizing the first polymerizable monomer composition reduces a time required for polymerization, as compared with an arrangement wherein the heat-polymerization is employed, for thereby minimizing a cost of manufacture of the ophthalmic lens.

The present invention also provides a method of producing a highly water-absorptive ophthalmic lens having the characteristics described above, comprising the steps of: preparing a second polymerizable monomer composition which at least includes vinyl carboxylate, halogenated-alkyl ethylene, and a crosslinking monomer which is not decomposed by saponification; introducing the second polymerizable monomer composition into a mold cavity of a mold assembly which gives a configuration of an intended ophthalmic lens; copolymerizing the second polymerizable composition by photo-polymerization or heat-polymerization to obtain a copolymer; and saponifying the obtained copolymer, for converting vinyl carboxylate unit into vinyl alcohol unit, so that the copolymer is made hydrophilic. According to the present method, the intended ophthalmic lens can be easily produced with high stability.

In one preferred form of the above-described method of the invention, the mold assembly consists of a male mold and a female mold at least one of which is formed of a light-transmitting material, and the step of copolymerizing the second polymerizable composition is carried out by photo-polymerization of the second polymerizable composition which is introduced into the mold cavity defined by the male mold and the female mold. The present arrangement wherein the photo-polymerization is employed for copolymerizing the second polymerizable monomer composition reduces a time required for polymerization, as compared with an arrangement wherein the heat-polymerization is employed, for thereby minimizing a cost of manufacture of the ophthalmic lens.

## DETAILED DESCRIPTION OF PREFERRED EMBODIMENTS

There will be described in detail some embodiments of the present invention. The present invention is directed to a highly water-absorptive ophthalmic lens which is formed of a macromolecular material including vinyl alcohol unit as a major component and whose water content is in a range of 50-90%. In the present invention, the macromolecular material is a cross-linked vinyl alcohol-allyl alcohol/halogenated-alkyl ethylene copolymer which includes allyl alcohol unit and/or halogenated-alkyl ethylene, together with the vinyl alcohol unit.

There will be described a first embodiment of the present invention wherein the cross-linked vinyl alcohol-allyl alcohol/halogenated-alkyl ethylene copolymer includes, as essential components, the vinyl alcohol unit and the allyl alcohol unit. This copolymer is hereinafter referred to as "cross-linked vinyl alcohol-allyl alcohol copolymer". Unlike the conventional cross-linked polyvinyl alcohol material whose major component is known vinyl alcohol unit [$-CH_2-CH(OH)-$], the copolymer of the first embodiment is characterized in that the allyl alcohol unit [$-CH_2-CH(CH_2OH)-$] is introduced into the polyvinyl alcohol chain. Owning to the introduction of the allyl alcohol unit, the ophthalmic lens to be produced from the copolymer does not suffer from the problem of crystallization experienced in an ophthalmic lens formed of the conventional cross-linked polyvinyl alcohol material, and exhibits excellent characteristics such as high degrees of dimensional stability and transparency.

The cross-linked vinyl alcohol-allyl alcohol copolymer described above is formed by saponifying a copoymer obtained by copolymerization of a first polymerizable monomer composition that at least includes allyl carboxylate which gives the allyl alcohol unit and a crosslinking monomer (crosslinking agent) which is not decomposed by saponification, together with vinyl carboxylate which gives the vinyl alcohol unit.

The vinyl carboxylate as a major component of the above-described first polymerizable monomer composition is hydrolyzed into alcohol by a saponification treatment (which will be described later) conducted after the copolymerization, and gives the vinyl alcohol unit, so that the ophthalmic lens is given excellent water-absorptive property, in other words, excellent oxygen permeability.

Any kinds of vinyl carboxylates may be employed in the present embodiment, as long as the vinyl carboxylate is copolymerizable with other polymerizable monomer components, and easily hydrolyzed by the saponification after the copolymerization so as to give the vinyl alcohol unit, and as long as the vinyl carboxylate permits the saponified ophthalmic lens to maintain its shape with high stability and have a suitable degree of elasticity. It is preferable to employ mono-vinyl ester of monobasic carboxylic acid, di-vinyl ester of dibasic carboxylic acid, or mono-, di-, or poly-vinyl ester of polybasic carboxylic acid each of which has a molecular weight preferably in a range from 86 to 1000, more preferably in a range form 86 to 600.

If the vinyl carboxylate having a molecular weight of 86-1000, preferably 86-600 is employed, the size of the ophthalmic lens does not considerably change before and after the saponification where the saponification treatment is conducted on the formed ophthalmic lens. In other words, the size of the ophthalmic lens immediately after the lens is formed and the size of the ophthalmic lens immediately after the lens is subjected to the saponification treatment is substantially identical with each other.

If the size of the ophthalmic lens after the lens has been subjected to the saponification treatment is considerably larger than that immediately after the lens has been formed, the ophthalmic lens may suffer from various troubles. For instance, if the copolymer obtained by polymerization has defects such as polymerization strain, flaws or scratches, chipping, or deformation, such defects are aggravated or the ophthalmic lens is deformed, due to swelling of the lens after the saponification.

In an ophthalmic lens whose water content is 80%, the weight of the lens in its dry state is 20% of that in its water-absorbing state, so that the weight of the water-absorbing lens is increased up to five times as large as that of the lens in the dry state. For obtaining the ophthalmic lens whose water content is about 80% while preventing a change of the size of the lens after the saponification followed by the copolymerization, it is preferable to employ vinyl carboxylate having a molecular weight of around 220, which molecular weight is about five times as large as the molecular weight of vinyl alcohol, i.e., 44.

In contrast, it is not preferable to use vinyl carboxylate whose molecular weight is smaller than the molecular weight of vinyl acetate, i.e., 86. For instance, it is not preferable to use vinyl formate whose molecular weight is 72 since the vinyl formate has a boiling point as low as about 50°C and a high degree of volatility, so that it is difficult to use the vinyl formate in the present invention. On the other hand, it is not preferable to use vinyl carboxylate whose molecular weight exceeds 1000 even if it is vinyl ester of perfluoroalkyl carboxylic acid having a relatively low boiling point for its molecular weight, since such vinyl carboxylate whose molecular weight exceeds 1000 cannot be substantially purified. Thus, it is difficult to obtain such vinyl carboxylate with a high degree of purity. In addition, where such vinyl carboxylate is employed, large carboxylic acid molecules are removed from the copolymer by hydrolysis after the saponification followed by the copolymerization, so that the size of the ophthalmic lens may be considerably reduced after the saponification. Accordingly, it is preferable to employ, as the vinyl carboxylate, the mono-vinyl ester of monobasic carboxylic acid, di-vinyl ester of dibasic carboxylic acid, or mono-, di-, or poly-vinyl ester of polybasic carboxylic acid each of which has a molecular weight in a range of 86-1000, preferably in a range of 86-600.

More specifically described, it is preferable to use, as the mono-vinyl ester of monobasic carboxylic acid, the vinyl acetate having a molecular weight of 86, and mono-vinyl ester of monobasic carboxylic acid which has a molecular weight of 86-1000 and into which a known electron attractive group such as halogen, a nitro group, a cyano group, or a -COR group is introduced. While it is not clear whether the polymerizability is improved owing to the introduction of the electron attractive group, the ophthalmic lens to be produced maintains its shape with high stability and exhibits a suitable degree of elasticity.

Examples of the monobasic carboxylic acid into which the electron attractive group is introduced include monochloroacetic acid, monofluoroacetic acid, 2-chlorobutyric acid, 3-chlorobutyric acid, 4-chlorobutyric acid, 2-chlorocaprylic acid, 3-chlorocaprylic acid, 2-chlorolauryl acid, 3-chlorolauryl acid, dichloroacetic acid, 2,3-dichloropropionic acid, 2,3-dichloroisobutyric acid, trichloroacetic acid, 2,2-bis(trifluoromethyl)propionic acid, perfluorodecanoic acid, nitroacetic acid, p-nitrophenylacetic acid, cyanoformic acid, cyanoacetic acid, 3-cyanopropionic acid, 2-cyano-2-methylpropionic acid, pyruvic acid, acetoacetic acid, levulinic acid, and 3-methyl-2-oxobutyric acid. The monocarboxylic acid into which the electron attractive group is introduced is not limited to those described above. It is noted that the carboxylic acid portion of the vinyl carboxylate should not have any polymerizable unsaturated double bonds. If the polymerizable unsaturated double bond is present in the carboxylic acid portion, the polymerization also occurs at this portion. In this case, the carboxylic acid unit exists in the polymer without being removed therefrom after the saponification treatment, undesirably causing adhesion of deposits to the lens or reduction of the strength of the lens.

Examples of the di-vinyl ester of dibasic carboxylic acid include di-vinyl ester of dibasic carboxylic acid such as adipic acid, sebacic acid, oxalic acid, malonic acid, methylmalonic acid, succinic acid, dimethylmalonic acid, ethylmalonic acid, methylsuccinic acid, glutaric acid, dimethylsuccinic acid, isopropylmalonic acid, methylglutaric acid, methyladipic acid, pimelic acid, suberic acid, di-n-propylmalonic acid, 1,9-nonanedicarboxylic acid, 1,10-decane dicarboxylic acid, 1,3-phenylenediacetic acid, phenylsuccinic acid, or benzylmalonic acid. Examples of the mono-, di-, or poly-vinyl ester of polybasic carboxylic acid include vinyl ester of polycarboxylic acid such as 1,2,3-propanetricarboxylic acid, 1,3,5-pentanetricarboxylic acid, or 1,2,3,4-butanetetracarboxylic acid. The di-vinyl ester of dibasic carboxylic acid and the mono-, di-, or poly-vinyl ester of polybasic carboxylic acid to be used in the present embodiment are not limited to those described above. It is noted that the carboxylic acid portion of each of the di-vinyl ester of dibasic carboxylic acid and the mono-, di-, or poly-vinyl ester of polybasic carboxylic acid should not have the polymerizable unsaturated bond for the same reasons as described above.

The di-vinyl ester of dibasic carboxylic acid and the mono-, di-, or poly-vinyl ester of polybasic carboxylic acid are obtained by esterification of polybasic carboxylic acid including at least two carboxyl groups (-COOH) per molecule. It is particularly preferable that all carboxyl groups in each molecule of the polybasic carboxylic acid are esterified, in view of solubility.

Any one of, or any combinations of, the vinyl carboxylates described above may be used in the present invention. For instance, in view of a fact that the vinyl carboxylate having a relatively low molecular weight (low-molecular weight vinyl carboxylate) has a relatively low boiling point and is volatile, it may be used in combination with the vinyl carboxylate having a relatively high molecular weight (high-molecular weight vinyl carboxylate), for thereby preventing a change in the composition of the polymerizable monomer composition. Further, the high-molecular weight vinyl carboxylate has a high degree of viscosity, making its handling difficult and causing bubbles. Accordingly, the high-molecular weight vinyl carboxylate may be used in combination with the low-molecular weight vinyl carboxylate in order to avoid the problems described above. Where at least two kinds of the vinyl carboxylates are combined and mixed, it is important that the at least two kinds of the vinyl carboxylates are copolymerizable with each other. If the polymerizability of the at least two kinds of the vinyl carboxylates are slightly different from each other, it may be possible to obtain a uniform or homogeneous polymer, by selecting the kind of the crosslinking monomer to be used and adjusting the amount of the crosslinking monomer. However, where the polymerizability of the at least two kinds of the vinyl carboxylates are considerably different from each other, it is not possible to obtain a uniform or homogeneous polymer even if the crosslinking monomer, a sensitizer or a polymerization initiator is suitably selected or the polymerization conditions are suitably adjusted.

The allyl carboxylate as one of the essential components of the first polymerizable monomer composition that gives the cross-linked vinyl alcohol-allyl alcohol copolymer is hydrolyzed into alcohol and the carboxylic acid separates therefrom, by the saponification conducted after the copolymerization, so as to give the allyl alcohol unit. Owing to the presence of the allyl alcohol unit, the ophthalmic lens formed of the cross-linked vinyl alcohol-allyl alcohol copolymer is free from the problems of the size change and the whitening or clouding phenomenon even after the ophthalmic lens has been repeatedly frozen and thawed or the ophthalmic lens has been kept under a low temperature of about 5 °C for a long time period. Any kinds of allyl carboxylate may be employed in the present embodiment, as long as the allyl carboxylate is uniformly copolymerizable with other polymerizable monomer components and hydrolyzed by the saponification conducted after the copolymerization to give the allyl alcohol unit, and as long as the allyl carboxylate permits the saponified ophthalmic lens to maintain its shape with high stability and have a suitable degree of elasticity.

It is known that the allyl carboxylate is inferior to the vinyl carboxylate in terms of the polymerization. For instance, where allyl acetate which is one example of allyl alkylcarboxylate is used as the allyl carboxylate, and copolymerized with vinyl acetate as the vinyl carboxylate according to a known manner, the polymerization does not proceed. In this case, the polymerizable monomer composition is kept in a liquid state and cannot be solidified. Thus, it is generally considered that it is difficult to obtain a copolymer wherein the vinyl carboxylate and the allyl carboxylte are uniformly polymerized with each other.

As a result of an extensive study by the inventor, it has been found that if poly-allyl ester of polybasic carboxylic acid wherein at least two carboxyl groups of polybasic carboxylic acid (polycarboxylic acid) are esterified is copolymerized with the vinyl carboxylate, a copolymer uniformly polymerized with the vinyl carboxylate can be easily obtained. The ophthalmic lens obtained by saponifying the thus obtained copolymer keeps its shape with high stability and exhibits a suitable degree of elasticity and a sufficiently high degree of strength suitable for practical use. In addition, the thus obtained ophthalmic lens exhibits excellent dimensional stability and transparency even after the lens has been repeatedly frozen and thawed or the lens has been kept under a low temperature of at 5 °C for a long time period. Therefore, it is preferable to use the poly-allyl ester of polybasic carboxylic acid wherein at least two carboxyl groups of the polybasic carboxylic acid are esterified. It is more preferable to use poly-allyl ester of polybasic carboxylic acid wherein all carboxyl groups of the polybasic carboxylic acid are esterified.

Examples of the polybasic carboxylic acid that constitutes the poly-allyl ester of polybasic carboxylic acid described above include: dicarboxylic acid such as adipic acid, sebacic acid, oxalic acid, malonic acid, methylmalonic acid, succinic acid, dimethylmalonic acid, ethylmalonic acid, methylsuccinic acid, glutaric acid, dimethylsuccinic acid, isopropylmalonic acid, methylglutaric acid, methyladipic acid, pimelic acid, suberic acid, di-n-propylmalonic acid, 1,9-nonanedicarboxylic acid, 1,10-decanedicarboxylic acid, 1,3-phenylenediacetic acid, phenylsuccinic acid, or benzylmalonic acid; and polycarboxylic acid such as 1,2,3-propanetricarboxylic acid, 1,3,5-pentanetricarboxylic acid, or 1,2,3,4-butanetetracarboxylic acid. The poly-allyl ester of polybasic carboxylic acid to be employed in the present embodiment is not limited to allyl esters of those polybasic carboxylic acids. It is noted that the carboxylic acid portion of each poly-allyl ester of polybasic carboxylic acid should not have any polymerizable unsaturated double bonds for the same reasons as described above.

Any one of, or any combinations of, the allyl carboxylates described above may be employed in the present embodiment. At least one of those allyl carboxylates is suitably selected in view of the polymerizability of the selected allyl carboxylate, for instance.

The allyl carboxylate is used in an amount of 0.001-0.8 mol, preferably 0.002-0.6 mol, per 1 mol of the vinyl carboxylate. If the amount of the allyl carboxylate is excessively small, the effect to be exhibited by the allyl carboxylate cannot be obtained. In other words, the ophthalmic lens to be obtained undesirably suffers from the problems of size reduction and whitening or clouding which may arise from the crystallization, after the lens has been repeatedly frozen and thawed or the lens has been kept at a low temperature of at 5°C for a long time period. On the other hand, if the amount of the allyl carboxylate is excessively large, the allyl carboxylate is substantially identical with polyallyl alcohol. In this case, the copolymer to be obtained may suffer from various problems. For instance, the copolymer does not have a high degree of elasticity which is favorably exhibited by the cross-linked polyvinyl alcohol copolymer. Further, the ease of polymerization of the copolymer may be deteriorated, making it difficult to obtain a high-molecular copolymer.

The crosslinking monomer (crosslinking agent) which is one of the essential components of the first polymerizable monomer composition is used for forming crosslinking bonds in the cross-linked vinyl alcohol-allyl alcohol copolymer that gives the ophthalmic lens. The crosslinking monomer is selected to satisfy the following conditions: The crosslinking monomer is readily and uniformly polymerizable with other polymerizable monomer components such as the vinyl carboxylate and the allyl carboxylate. The crosslinking monomer is not decomposed by saponification. In other words, the crosslinking or bridging portions of the crosslinking monomer should not be cut or broken. The crosslinking monomer permits the saponified ophthalmic lens to keep its shape with high stability and have a suitable degree of elasticity.

Any known crosslinking monomers may be employed as long as the selected crosslinking monomer satisfies the above-described conditions. Examples of the crosslinking monomer include divinyl benzene, triallyl cyanurate, triallyl isocyanurate, diethylene glycol bisallyl carbonate, triallyl ester of trimellitic acid, allyl ether, diallyl ether of alkylene glycol or polyalkylene glycol, divinyl ether of alkylene glycol or polyalkylene glycol, allyl ether vinyl ether of alkylene glycol or polyalkylene glycol, and diallylidene pentaerythritol as disclosed in JP-A-9-40720. At least one of known crosslinking monomers is suitably selected depending upon the kind of the vinyl carboxylate, the polymerization method, etc.

Where the vinyl acetate is subjected to photo-polymerization in the presence of a sensitizer such as 2-hydroxy-2-methyl-1-phenyl-propane-1-one, it is preferable to select, as the crosslinking monomer, divinyl ether of polyalkylene glycol such as diethylene glycol divinyl ether. Where the vinyl acetate is subjected to heat-polymerization in the presence of a polymerization initiator such as azobisisovaleronitrile, it is preferable to select, as the crosslinking monomer, diallyl ether of polyalkylene glycol such as diethylene glycol diallyl ether. Where the vinyl monochloroacetate is subjected to photo-polymerization in the presence of the sensitizer, it is preferable to select, as the crosslinking monomer, triallyl isocyanurate. The combination of the crosslinking monomer and the vinyl carboxylate is not limited to those described above.

The crosslinking monomer is included in the first polymerizable monomer composition that gives the cross-linked vinyl alcohol-allyl alcohol copolymer, in an amount of 0.0005-0.3 mol, preferably 0.001-0.2 mol, per 1 mol of the vinyl carboxylate. If the amount of the crosslinking monomer is excessively small, the copolymer to be obtained is not sufficiently cross-linked. In this case, the ophthalmic lens after the saponification may not keep its shape and have a suitable degree of elasticity. On the other hand, if the amount of the crosslinking monomer is excessively large, the obtained coplymer tends to be brittle, causing a risk that the saponified ophthalmic lens does not have a sufficiently high degree of strength required by the ophthalmic lens.

The first polymerizable monomer composition which at least includes the vinyl carboxylate, the allyl carboxylate, and the crosslinking monomer that is not decomposed by saponification may further include, as needed, other polymerizable monomers, as long as the monomers are uniformly copolymerizable with the monomer components described above and permit the ophthalmic lens after the saponification treatment to maintain its shape with high stability and have a suitable degree of elasticity. For instance, the first polymerizable monomer composition may further include a lens-strength improving component for improving the mechanical strength of the ophthalmic lens.

As the lens-strength improving component, it is preferable to employ halogenated-alkyl ethylene, and/or a macromonomer as disclosed in JP-A-62-21101, JP-A-2-15233, JP-A-6-102471, JP-A-6-102472, and JP-A-7-49470. The macromonomer has at least one polymerizable group per molecule on an average and is obtained by copolymerizing a monomer composition that includes, as major components, alkyl (meth)acrylate monomer and a monomer having at least two polymerizable groups per molecule. In the present specification, "(meth)acrylate" is generic to the following two compounds: "acrylate" and "methacrylate".

As the halogenated-alkyl ethylene, there may be employed perfluoroalkyl ethylene wherein all hydrogen atoms in the alkyl group thereof are substituted with fluorine atoms, such as perfluorobutyl ethylene, perfluorohexyl ethylene, perfluorooctyl ethylene, or perfluorodecyl ethylene; allyl chloride; 3-chloro-1-butene; 3-chloro-2-chloromethyl-1-propene; or allyl bromide. Any one of, or any combinations of, the halogenated-alkyl ethylenes described above may be used in the present embodiment.

The macromonomer as one example of the lens-strength improving component to be added to the first polymerizable monomer composition is a high-molecular weight polymerizable monomer. The macromonomer is obtained by copolymerization of a monomer composition that includes, as major components, alkyl (meth)acrylate monomer (hereinafter referred to as "component (a)") and a monomer having at least two polymerizable groups per molecule (hereinafter referred to as "component (b)").

The component (a) is alkyl (meth)acrylate monomer wherein the alkyl group in the molecule may be a straight chain, a branched chain, or a cyclic alkyl group, and hydrogen atoms in the alkyl group are substituted with halogen atoms. Examples of the component (a) include methyl (meth)acrylate, ethyl (meth)acrylate, propyl (meth)acrylate, butyl (meth)acrylate, hexyl (meth)acrylate, dodecyl (meth)acrylate, cyclohexyl (meth)acrylate, trifluoroethyl (meth)acrylate, pentafluoropropyl (meth)acrylate, and hexafluoroisopropyl (meth)acrylate. Any one of, or any combinations of, those alkyl (meth)acrylate monomers may be employed. Among those alkyl (meth)acrylate monomers described above, it is preferable to employ alkyl methacrylate monomer such as methyl methacrylate, ethyl methacrylate, propyl methacrylate, butyl methacrylate, or hexyl methacrylate. The macromonomer which includes the alkyl methacrylate monomer as the component (a) does not suffer from decomposition of its ester portion after the saponification treatment followed by the copolymerization.

Examples of the component (b), i.e. the monomer having at least two polymerizable groups per molecule include, in addition to allyl (meth)acrylate and vinyl (meth)acrylate as disclosed in the Publications described above, triallyl cyanurate, divinyl benzene, triallyl isocyanurate, diethylene glycol bisallyl carbonate, triallyl ester of trimellitic acid, diallyl ether of alkylene glycol or polyalkylene glycol, divinyl ether or allyl ether vinyl ether of alkylene glycol or polyalkylene glycol, and diallylidene pentaerythritol. Any one of, or any combinations of, those monomers may be employed.

The molar ratio of the component (a) to the component (b) is preferably within a range between 80:20 and 99.97:0.03, more preferably between 95:5 and 99.95:0.05. If the amount of the component (b) is excessively small, it is difficult to obtain a macromonomer having good copolymerizability. On the other hand, if the amount of the component (b) is excessively large, the crosslinking degree of the copolymer that gives the intended ophthalmic lens tends to be too high.

While the macromonomer includes the component (a) and the component (b) as the major components, the macromonomer may further include a hydrophilic monomer such as hydroxyethyl (meth)acrylate or N-vinylpyrrolidone, as a polymerizable component for forming the macromonomer if the solubility of the macromonomer with respect to the vinyl carboxylate is improved. The hydrophilic monomer is added in a relatively small amount. For instance, the hydrophilic monomer is added in an amount of not greater than 0.2 mol per 1 mol of the component (a).

The macromonomer described above is produced according to a solution-polymerization method, for instance. In the solution-polymerization method, all of the polymerizable components described above are dissolved in a solvent, and a polymerizaion initiator is added thereto. The mixture is polymerized at a refluxing temperature while it is stirred or agitated. The solvent used in the solution-polymerization method is not particularly limited, provided that the polymerizable components are effectively dissolved and it does not inhibit the polymerization reaction. For instance, there may be used benzene or acetone known in the art. Any one of, or any combinations of, the solvents may be employed. The amount of the solvent to be used is not particularly limited, but suitably adjusted depending upon the polymerization temperature and time, the kinds of the polymerizable components, etc.

Examples of the polymerization initiator used for polymerization of the macromonomer include azobisisobutyronitrile, azobisdimethylvaleronitrile, t-butyl hydroperoxide, cumene hydroperoxide, and benzoyl peroxide. The polymerization initiator is used in an amount sufficient to initiate the polymerization. For instance, the polymerization initiator is used in an amount of 0.01-5 parts by weight, more preferably 0.05-2 parts by weight, per 100 parts by weight of the sum of the amounts of the all polymerizable components.

It is generally difficult to specifically define the polymerization temperature and the polymerization time since the polymerization temperature and the polymerization time are interrelated with each other. It is practically desirable that the copolymerization reaction is conducted at a relatively low temperature (50°C-80°C) for a time period from several minutes to several hours.

The macromonomer has a number average molecular weight generally in a range from 5000 to 200000, preferably in a range from 10000 to 100000, since the mechanical strength of the ophthalmic lens to be obtained is largely influenced by the number average molecular weight. If the number average molecular weight of the macromonomer is excessively small, the mechanical strength of the ophthalmic lens cannot be improved in spite of the addition of the macromomer. If the number average molecular weight is excessively large, the macromonomer is not likely to be uniformly mixed with the other polymerizable monomer components, making it difficult to produce a uniform ophthalmic lens.

The macromonomer preferably has at least one polymerizable group on an average per molecule, more preferably 1.2-10 polymerizable groups on an average per molecule. Where the average number of the polymerizable group per molecule is too small, the ratio of the macromonomer not including any polymerizable groups increases. In this case, it undesirably takes a relatively long time for elution of the macromonomer which has not been polymerized due to the lack of the polymerizable groups. On the other hand, if the average number of the polymerizable group per molecule is too large, the number of crosslinking points or sites increases. In this case, the cross-linked copolymer that gives the ophthalmic lens undesirably has a low degree of freedom in its material, so that the ophthalmic lens tends to be brittle or fragile.

The first polymerizable monomer composition includes, as the lens-strength improving component, the macromonomer and/or the halogenated-alkyl ethylene. Any one of, or any combinations of, the macromonomers and the halogenated-alkyl ethylene described above may be added to the first polymerizable monomer composition as the lens-strength improving component. The lens-strength improving component is added in an amount of 0.5-40 parts by weight, preferably 1-30 parts by weight per 100 parts by weight of the total amount of the vinyl carboxylate, the allyl carboxylate, and the crosslinking monomer, more specifically, per 100 parts by weight of a monomer mixture that consists of 0.001-0.8 mol of the allyl carboxylate, 0.0005-0.3 mol of the crosslinking monomer which is not decomposed by saponification, and 1 mol of the vinyl carboxylate.

If the amount of the lens-strength improving component is excessively small, the effect of addition of the lens-strength improving component cannot be obtained. On the other hand, if the amount of the lens-strength improving component is excessively large, the water content of the ophthalmic lens is decreased down to less than 50%, making it difficult to give excellent oxygen permeability to the ophthalmic lens.

The first polymerizable monomer composition may further include, in addition to the above-described lens-strength improving component, various additives, as needed. For instance, a polymerizable UV-absorbing monomer or pigment, or a UV-absorbing pigment may be added to the first polymerizable monomer composition for the purpose of imparting the UV-absorbing property to the ophthalmic lens or coloring the ophthalmic lens, so that such UV-absorbing monomer or pigment is introduced into the copolymer as the constituent component of the lens. It is needless to mention that each additive should not inhibit the effect of the invention and is added in an amount which does not inhibit the effect of the invention.

For producing the cross-linked vinyl alcohol-allyl alcohol copolymer that gives an intended ophthalmic lens, by using the above-described first polymerizable monomer composition, the first polymerizable monomer composition is copolymerized into a copolymer, and the obtained copolymer is subjected to a saponification treatment.

More specifically described, the first polylmerizable monomer composition is polymerized, for instance: (1) a heat-polymerization method wherein the polymerizable monomer composition to which the polymerization initiator has been added is heated for polymerization at a temperature in a range from about 30°C to 50°C for a time period in a range from several hours to several tens of hours, and the temperature is gradually increased up to about 120°C over a time period of tens or more hours to complete the polymerization; (2) a photo-polymerization method wherein the polymerizable monomer composition to which the sensitizer has been added is exposed to a suitable light such as an ultraviolet light for polymerization; and (3) a method wherein the heat-polymerization and the photo-polymerization are combined. Among the methods described above, the photo-polymerization is advantageous since the time required for the polymerization can be effectively reduced in the photo-polymerization method, as compared with the heat-polymerization method, for thereby improving the production efficiency of the ophthalmic lens so as to minimize the cost of manufacture of the ophthalmic lens. As the polymerization system, it is preferable to employ an ordinary bulk polymerizaion method which assures high polymerization efficiency and high productivity. As needed, a solution polymerization method may be employed.

Where the polymerizable monomer composition is heat-polymerized, the polymerization initiator is used. Where the polymerizable monomer composition is polymerized by exposure to the light such as the UV light, the sensitizer is used. The polymerizable monomer composition may be photo- and/or heat-polymerized, by using the sensitizer and/or the polymerization initiator.

Examples of the polymerization initiator include azobisisobutyronitrile, azobisdimethylvaleronitrile, t-butylhydro peroxide, and benzoyl peroxide. Examples of the sentitizer include diethoxy acetophenone, 4-(2-hydroxyethoxy) phenyl (2-hydroxy-2-propyl)ketone, 2-hydroxy-2-methyl 1-phenylpropyl-1-one, 2-methyl-2-morpholino (4-thiomethylphenyl)propyl-1-one, 1 -hydroxycyclohexyl phenylketone, 2-benzyl-2-dimethylamino 4-morpholinophenyl-butanone, and benzyl dimethylketal.

One or more of those polymerization initiators or those sensitizers may be suitably selected. The amount of the polymerization initiator or the sensitizer to be used is in a range from 0.00001 to 0.05 mol, preferably in a range from 0.00002 to 0.03 mol. If the amount of the polymerization initiator or the sensitizer exceeds 0.05 mol, the copolymer to be obtained does not have a sufficiently large average molecular weight. In this case, the ophthalmic lens does not have a desirable strength, or the color of the lens turns yellow. If the amount is smaller than 0.00001 mol, the copolymer does not solidify due to a large amount of residual monomer.

The vinyl carboxylate-allyl carboxylate copolymer obtained by polymerization described above is then subjected to the saponification treatment, so that the vinyl carboxylate unit and the allyl carboxylate unit are hydorized, whereby the copolymer is made hydrophilic to provide the cross-linked vinyl alcohol-allyl alcohol copolymer. The saponification treatment is conducted in a manner similar to the conventional method of saponification of the polyvinyl ester to obtain the polyvinyl alcohol (PVA). Namely, the vinyl carboxylate unit and the allyl carboxylate unit in the copolymer are treated with an alkaline or an acidic compound, so that the units are converted into the respective alcohol units. The saponification with the acidic compound may suffer from the following drawbacks: The saponification speed is comparatively low, and it is difficult to obtain a homogeneous copolymer. Further, the side reaction may take place. In view of this, the saponification with the alkaline compound is preferable in the present invention.

The alkaline compound used for the saponification is a hydroxide of ammonia, an alkali metal or an alkaline earth metal. Examples of the alkaline compound include ammonium hydroxide, sodium hydroxide, potassium hydroxide, and calcium hydroxide. Since these alkaline compounds are usually solid, they are dissolved in a solvent, i.e., alcohols such as methanol, ethanol, propyl alcohol, and butyl alcohol, ethers such as diethyl ether and tetrahydrofuran, or water, so that the alkaline compounds are used for the saponification in the form of alkaline solutions. The copolymer is immersed in the alkaline solution for the saponification. Among those alkaline solutions, those employing alcohols are preferably used. In particular, a 0.1-1.0N alkali alcoholic solution is preferred. For efficient saponification, the alkali alcoholic solution may be mixed with an aqueous alkaline solution.

The reaction temperature for the saponification is generally in a range of 0-70°C. For efficient saponification, the temperature is held in a range of 40-70°C by heating the solution. The saponification at an excessively high temperature may cause deterioration of the ophthalmic lens to be obtained. In view of this, the reaction temperature is preferably not higher than about 70°C. The reaction time for the saponification is suitably determined depending upon the kind and concentration of the alkaline compound, the reaction temperature for the saponification, etc. Practically, it is preferable to determine the kind and concentration of the alkaline compound such that the saponification reaction is completed within a time period from a few minutes to a few hours where the saponification treatment is carried out at room temperature. Further, the saponification reaction may be conducted in the heterogeneous system.

The saponification degree is preferably not less than 90 mol%, more preferably not less than 95 mol%. If the saponification degree is less than 90 mol%, the ophthalmic lens to be obtained may not have the desired water content or the ophthalmic lens may not be used with high stability for a long time period since the water content of the lens is changed by a boiling operation, for instance, which is repeatedly conducted on the lens during the use of the lens for a long time period.

The copolymer which has been subjected to the saponification treatment described above is washed with water or saline for sterilization, or neutralization of the residual alkaline compound, so as to provide the water-absorptive cross-linked vinyl alcohol-allyl alcohol copolymer, and accordingly the ophthalmic lens safe to living bodies.

The ophthalmic lens such as a contact lens or an intraocular lens may be produced, by using the cross-linked alcohol-allyl alcohol copolymer obtained as described above, according to any known methods which include: (1) a mechanical processing method wherein a bar-, block-, or plate- shaped blank (polymer) obtained by polymerization of the polymerizable monomer composition in a suitable mold or vessel is formed into a desired shape by cutting or grinding; (2) a molding method wherein the polymerizable monomer composition is polymerized in a mold cavity of a mold assembly that gives the configuration of the intended ophthalmic lens, and the molded product is subjected to mechanical finishing as needed; and (3) a combination of the mechanical processing method and the molding method. Among those methods, the molding method is preferably employed to effectively reduce the cost of manufacture of the lens.

By employing the molding method, a contact lens as the ophthalmic lens is produced in the following manner, for instance. Initially, there is prepared a mold assembly consisting of a male mold and a female mold having respective molding surfaces to give the configuration of the intended contact lens. The polymerizable monomer composition to which the sensitizer and/or the polymerization initiator necessary for the polymerization has been added is introduced into a mold cavity defined when the male and female molds are closed together. The polymerizable monomer composition accommodated in the mold cavity is exposed to a light such as a UV light for photo-polymerization, or heated for heat-polymerization, whereby the polymerizable monomer composition is polymerized into the vinyl carboxylate-allyl carboxylate copolymer.

The material of the mold assembly is not particularly limited. There may be employed any known materials conventionally used for producing the ophthalmic lenses. Where the photo-polymerization method is employed, at least one of the male and female molds of the mold assembly needs to be formed of a light-transmitting material which permits the light to pass therethrough.

The thus obtained copolymer is removed from the mold assembly according to a known manner, and subjected to the saponification treatment described above, so that the vinyl carboxylate unit and the allyl carboxylate unit in the copolymer are hydrolyzed to make the copolymer hydrophilic. Thus, the ophthalmic lens (contact lens) according to the present invention is produced. It is needless to mention that the thus produced ophthalmic lens is subjected to a neutralization or a sterilization treatment for assuring the living bodies of a sufficiently high degree of safety.

In the cross-linked vinyl alcohol-allyl alcohol copolymer that gives the ophthalmic lens of the present invention, the allyl alcohol unit having carbon atoms whose number is different by one from that of the vinyl alcohol unit is introduced into the copolymer, together with the vinyl alcohol unit. Accordingly, the ophthalmic lens exhibits significantly high degrees of dimensional stability and transparency without suffering from whitening or clouding even after the lens has been repeatedly frozen and thawed or the lens has been exposed to a low temperature of about 5°C for a long time period.

The ophthalmic lens according to the present invention exhibits excellent dimensional stability and transparency under severe conditions wherein the aqueous component contained in the lens is repeatedly frozen and thawed. In other words, the present ophthalmic lens maintains the dimensional stability and transparency after (A) the ophthalmic lens has been subjected to three cycles of a freezing-thawing operation wherein the ophthalmic lens is left at a temperature of not higher than -10°C for not less than twelve hours, and is subsequently left at a temperature in a range from 15°C to 30°C for not less than six hours, and/or (B) the ophthalmic lens has been kept at a temperature in a range from 1°C to 9 °C for three months.

Like the vinyl alcohol unit, the allyl alcohol unit introduced into the cross-linked copolymer that constitutes the present ophthalmic lens is nonionic. Accordingly, the calcium ions and the protein deposits are not likely to adhere to the ophthalmic lens. Further, the strength of the ophthalmic lens is not lowered by the introduction of the allyl alcohol unit, so that the ophthalmic lens exhibits a sufficiently high degree of strength required by the ophthalmic lens.

There will be next described a second embodiment of the present invention wherein the cross-linked vinyl alcohol-allyl alcohol/halogenated-alkyl ethylene copolymer includes, as essential components, the vinyl alcohol unit and the halogenated-alkyl ethylene unit. This copolmer is hereinafter referred to as "cross-linked vinyl alcohol-halogenated-alkyl ethylene copolymer". The cross-linked vinyl alcohol-halogenated-alkyl ethylene copolymer described above is formed by saponifying a copoymer obtained by copolymerization of a second polymerizable monomer composition that at least includes halogenated-alkyl ethylene and a crosslinking monomer (crosslinking agent) which is not decomposed by saponification, together with vinyl carboxylate.

The vinyl carboxylate as one of the essential components of the second polymerizable monomer composition of the second embodiment is the same as that described above with respect to the first polymerizable monomer composition of the illustrated first embodiment. Accordingly, a detailed explanation of the vinyl carboxylate is dispensed with to avoid a redundant description.

The halogenated-alkyl ethylene as one of the essential components of the second polymerizable monomer composition that gives the cross-linked vinyl alcohol-halogenated-alkyl ethylene copolymer of the second embodiment is used for advantageously adjusting the water content of the ophthalmic lens to a desired value while permitting the ophthalmic lens to exhibit a sufficiently high degree of strength. The water content of the ophthalmic lens can be easily controlled with high stability by suitably adjusting the amount of the halogenated-alkyl ethylene to be used.

More specifically described, the halogenated-alkyl ethylene can be easily purified by distillation, for instance, so that the halogenated-alkyl ethylene having a relatively high degree of purity can be used for attaining the desired water content. The water content of the ophthalmic lens is lowered to increase its hydrophilicity by increasing the amount of the halogenated-alkyl ethylene to be used, while the water content of the lens is increased by decreasing the amount of the halogenated-alkyl ethylene. The adjustment of the water content of the ophthalmic lens using the halogenated-alkyl ethylene can be carried out while permitting the ophthalmic lens to exhibit a high degree of strength required by the ophthalmic lens.

Any known halogenated-alkyl ethylenes can be employed, as long as the halogenated-alkyl ethylene is uniformly copolymerized with the other polymerizable monomer components such as the vinyl carboxylate and is not decomposed by the saponification after the copolymerization, and as long as the halogenated-alkyl ethylene permits the saponified ophthalmic lens to maintain its shape with high stability and have a suitable degree of elasticity.

As the halogenated-alkyl ethylene, there may be employed perfluoroalkyl ethylene wherein all hydrogen atoms in the alkyl group thereof are substituted with fluorine atoms, such as perfluorobutyl ethylene, perfluorohexyl ethylene, perfluorooctyl ethylene, or perfluoro decylethylene; allyl chloride; 3-chloro-1-butene; 3-chloro-2-chloromethyl-1-propene; or allyl bromide. Any one of, or any combinations of, the halogenated-alkyl ethylenes described above may be used in the present embodiment. It is particularly preferable to use the perfluoroalkyl ethylene since it is effectively copolymerized with the vinyl carboxylate owing to its improved polymerizability which appears to be attributed to an electron attractive effect of the halogen.

The halogenated-alkyl ethylene is included in an amount of 0.0001-0.5 mol, preferably 0.0002-0.3 mol, per 1 mol of the vinyl carboxylate. If the amount of the halogenated-alkyl ethylene is too small, the effect of addition of the halogenated-alkyl ethylene is not obtained. Namely, the water content of the ophthalmic lens cannot be substantially adjusted. On the other hand, if the amount of the halogenated-alkyl ethylene is too large, the water content of the ophthalmic lens is undesirably decreased down to less than 50%, so that the ophthalmic lens does not exhibit a satisfactory water-absorptive property.

The crosslinking monomer (crosslinking agent) as one of the essential components of the second polymerization monomer composition is used for forming crosslinking bonds in the cross-linked vinyl alcohol-halogenated-alkyl ethylene copolymer that gives the ophthalmic lens. The crosslinking monomer is selected to satisfy the following conditions: The crosslinking monomer is readily and uniformly polymerizable with other polymerizable monomer components such as the vinyl carboxylate and the halogenated-alkyl ethylene. The crosslinking monomer is not decomposed by saponification. In other words, the crosslinking or bridging potions of the crosslinking monomer should not be cut or broken by the saponification. The crosslinking monomer permits the saponified ophthalmic lens to keep its shape with high stability and have a suitable degree of elasticity. Specific examples and an amount of the crosslinking monomer to be used in the second embodiment are the same as those described above with respect to the first embodiment, and a detailed explanation of which is dispensed with.

Like the first polymerizable monomer composition in the illustrated first embodiment, the second polymerizable monomer composition may further include various additives such as the above-described UV-absrobing monomer or pigment for imparting the UV-absorbing property to the lens or coloring the lens, in an amount which does not inhibit the effect of the invention.

For producing the cross-linked vinyl alcohol-halogenated-alkyl ethylene copolymer that gives an intended ophthalmic lens, by using the above-described second polymerizable monomer composition, the second polymerizable monomer composition is copolymerized into a copolymer, and the obtained copolymer is subjected to a saponification treatment. The polymerization method for polymerizing the second polymerizable monomer composition is the same as that described above with respect to the first polymerizable monomer composition in the illustrated first embodiment, and a detailed explanation of which is not provided. Specific examples of the polymerization initiator used in the heat-polymerization and the sensitizer used in the photo-polymerization, and the amount of the polymerization initiator and the sensitizer to be used are the same as those described above in the first embodiment.

The vinyl carboxylate-halogenated-alkyl ethylene copoymer obtained by polymerization described above is then subjected to the saponification treatment in a manner similar to that described above with respect to the first embodiment, so that the vinyl carboxylate unit is hydrolyzed, whereby the copolymer is made hydrophilic to provide the cross-linked vinyl alcohol-halogenated-alkyl ethylene copolymer. As in the first embodiment, it is preferable to employ in the second embodiment the saponification with the alkaline compound. Specific examples of the alkaline compound are the same as those described in the first embodiment. The reaction temperature and time for the saponification, and the saponification degree are the same as those described in the first embodiment, and a detailed explanation of which is dispensed with.

The copolymer which has been subjected to the saponification treatment described above is washed with water or saline for sterilization, or neutralization of the residual alkaline compound, so as to provide the water-absorptive cross-linked vinyl alcohol-halogenated-alkyl ethylene copolymer, and accordingly the ophthalmic lens safe to the living bodies.

By using the thus obtained cross-linked copolymer, the ophthalmic lens such as a contact lens or an intraocular lens is produced according to any known methods as described above with respect to the first embodiment, such as the mechanical processing method, the molding method, and the combination of those two methods.

By employing the molding method, a contact lens as the ophthalmic lens is produced in the following manner, for instance. Initially, there is prepared a mold assembly consisting of a male mold and a female mold having respective molding surfaces to give the configuration of the intended contact lens. The polymerizable monomer composition to which the sensitizer and/or the polymerization initiator necessary for the polymerization has been added is introduced into a mold cavity defined when the male and female molds are closed together. The polymerizable monomer composition accommodated in the mold cavity is exposed to a light such as a UV light for photo-polymerization, or heated for heat-polymerization, whereby the polymerizable monomer composition is polymerized into the vinyl carboxylate-halogenated-alkyl ethylene copolymer.

The material of the mold assembly is not particularly limited. There may be employed any known materials conventionally used for producing the ophthalmic lenses. Where the photo-polymerization method is employed, at least one of the male and female molds of the mold assembly needs to be formed of a light-transmitting material which permits the light to pass therethrough.

The thus obtained copolymer is removed from the mold assembly according to a known manner, and subjected to the saponification treatment described above, so that the ophthalmic lens according to the present invention is produced. It is needless to mention that the thus produced ophthalmic lens is subjected to a neutralization or a sterilization treatment for assuring the living bodies of a sufficiently high degree of safety.

In the thus produced ophthalmic lens, its water content is adjusted by the halogenated-alkyl ethylene. Accordingly, the water content of the ophthalmic lens can be easily adjusted with high stability. Further, the ophthalmic lens has a high degree of strength required by the ophthalmic lens, irrespective of the change of the water content.

Accordingly, the water content of the ophthalmic lens can be adjusted as desired depending upon individual users. Thus, it is possible to supply the ophthalmic lens with high safety to the users.

The halogenated-alkyl ethylene introduced into the copolymer that constitutes the ophthalmic lens is nonionic, so that the ionic deposits are not likely to adhere to the ophthalmic lens.

EXAMPLES

There will be described some examples of the present invention to further clarify the present invention. It is, however, to be understood that the present invention is not limited to the details of the following examples and the presently preferred embodiments described above, but may be embodied with various changes, modifications and improvements, which may occur to those skilled in the art, without departing from the spirit and scope of the present invention defined in the attached claims.

Initially, there were prepared polymerizable monomer compositions according to Examples 1-6 of the present invention, and a comparative polymerizable monomer composition according to a Comparative Example 1, by using various compounds indicated in the following TABLE 1. As the vinyl carboxylate, vinyl acetate and vinyl monochloroacetate were used. As the allyl carboxylate, diallyl adipate was used. As the halogenated-alkyl ethylene, perfluorohexyl ethylene and perfluorooctyl ethylene were used. As the crosslinking monomer, diethylene glycol divinyl ether, diethylene glycol diallyl ether, and triallyl isocyanurate were used. As the sensitizer, 2-hydroxy-2-methyl-1-phenyl-propane-1-one ("Darocure 1173") was used. As the lens-strength improving component, perfluorobutyl ethylene and a macromonomer which will be described in detail were used. Further, as the coloring matter, tetra(4-methacrylamide)copper phthalocyanine was used.

TABLE 1

| Polymerizable monomer components | Compounds |
|---|---|
| vinyl carboxylate | vinyl acetate |
| | vinyl monochloroacetate |
| allyl carboxylate | diallyl adipate |
| halogenated-alkyl ethylene | perfluorohexyl ethylene |
| | perfluorooctyl ehtylene |
| crosslinking monomer | diethylene glycol divinyl ether |
| | diethylene glycol diallyl ether |
| | triallyl isocyanurate |
| sensitizer | Darocure 1173 |
| lens-strength improving component | perfluorobutyl ethylene |
| | macromonomer |
| coloring agent | tetra(4-methacrylamide)copper phthalocyanine |

Preparation of the macromonomer

There were introduced, into a three-necked round bottom flask, 95 g of methyl methacrylate, 0.93 g of allyl methacrylate, 0.49 g of ethylene glycol dimethacrylate, 5g of hydroxybutyl methacrylate, 1.3 g of azobisisobutyronitrile as the polymerization initiator, and 600 ml of benzene as the solvent. The mixture was polymerized at 70 °C for 1.5 hours while being stirred. Then, the obtained polymerization solution was put into n-hexane, so that the copolymer precipitated was collected, and dried at a reduced pressure. Thereafter, the copolymer was dissolved in benzene, and then put into a large amount of n-hexane, so that the copolymer was again precipitated for purification. The precipitates were collected, and dried at a reduced pressure to obtain the macromonomer.

The thus obtained macromonomer has a number average molecular weight of 23000, a weight average molecular weight of 50600, a molecular weight distribution of 2.2, an average number of allyl groups per molecule of 1.3, and an average number of methacryloyl groups per molecule of 1.1. The number average molecular weight, the molecular weight distribution, and the average number of the polymerizable groups per molecule were measured according to the following methods:

Number average molecular weight: Mn

The number average molecular weight was measured by gel permeation chromatography.

Molecular weight distribution

The weight average molecular weight (Mw) was measured in a manner similar to that for measuring the number average molecular weight (Mn), and the molecular weight distribution was calculated according to the following equation:

$$\text{Molecular weight distribution} = Mw/Mn$$

Average number of the polymerizable groups per molecule

The average number of the polymerizable groups per molecule was measured by gel permeation chromatography and Fourier's conversion proton nuclear magnetic resonance spectrum.

As the mold assembly, there was prepared a mold assembly for a contact lens consisting of a male mold and a female mold which are formed of a light-transmitting material, i.e., polypropylene. The male and female molds of the mold assembly were designed to give a standard lens having a center thickness of 0.1 mm, a diameter of 14 mm, and a power of -3D.

Preparation of polymerizable monomer compositions according to Examples 1-6 of the present invention and according to Comparative Example 1

<Example 1>

The monomer composition according to the Example 1 was obtained by mixing 0.012 mol of the diallyl adipate and 0.006 mol of the diethylene glycol divinyl ether with 1 mol of the vinyl acetate. To the mixture, 0.0024 mol of the Darocure 1173 was added, whereby the monomer composition according to the Example 1 was obtained.

<Example 2>

The polymerizable monomer composition according to the Example 2 was obtained by adding 13.5 parts by weight of perfluorobutyl ethylene, 0.9 part by weight of the Darocure 1173, and 0.04 part by weight of the tetra(4-methacrylamide)copper phthalocyanine as the coloring agent, to 100 parts by weight of a polymerizable monomer composition consisting of 1 mol of the vinyl acetate, 0.029 mol of the diallyl adipate, and 0.014 mol of the diethylene glycol divinyl ether. The thus obtained mixture was dissolved by an ultrasonic wave, and filtered by a 0.45μm -filter, so as to provide the monomer composition according to the Example 2.

<Example 3>

The polymerizable monomer composition according to the Example 3 was obtained by adding 25 parts by weight of the macromonomer prepared as described above and 0.6 part by weight of the Darocure 1173, to 100 parts by weight of a polymerizable monomer composition consisting of 1 mol of the vinyl acetate, 0.010 mol of the diallyl adipate, and 0.014 mol of the diethylene glycol divinyl ether, so as to provide the monomer composition according to the Example 3.

<Example 4>

The polymerizable monomer composition according to the Example 4 was obtained by mixing 0.029 mol of the diallyl adipate and 0.014 mol of the diethylene glycol diallyl ether with 1 mol of the vinyl monochloroacetate. To the mixture, 0.0037 mol of the Darocure 1173 was added, whereby the monomer composition according to the Example 4 was obtained.

<Example 5>

The polymerizable monomer composition according to the Example 5 was obtained by adding 0.0024 mol of the Darocure 1173 and 0.0004 mol of the tetra(4-methacrylamide)copper phthalocyanine, to a polymerizable monomer composition consisting of 1 mol of the vinyl acetate, 0.008 mol of the perfluorohexyl ethylene, and 0.011 mol of the diethylene glycol divinyl ether. The thus obtained mixture was dissolved by an ultrasonic wave, and filtered by a 0.45μm-filter, so as to provide the monomer composition according to the Example 5.

<Example 6>

The polymerizable monomer composition according to the Example 6 was obtained by mixing 0.006 mol of the perfluorooctyl ethylene and 0.003 mol of the triallyl isocyanurate with 1 mol of the vinyl monochloroacetate. To this mixture, 0.0035 mol of the Darocure 1173 was added, so as to provide the monomer composition according to the Example 6.

<Comparative Example 1>

The polymerizable monomer composition according to the Comparative Example 1 was obtained by mixing 0.006 mol of the diethylene glycol divinyl ether with 1 mol of the vinyl acetate. To the mixture, 0.0024 mol of the Darocure 1173 was added, whereby the monomer not including the allyl carboxylate was provided.

Polymerization of the polymerizable monomer compositions

The polymerizable monomer compositions according to the Examples 1-6 of the present invention and the Comparative Example 1 were put into the respective female molds. Then, the female molds were assembled with the respective male molds, so that the mold cavities of the respective mold assemblies were filled with the respective polymerizable monomer compositions. The UV light having an intensity of 10 mW/cm$^2$ was applied to the polymerizable monomer compositions by using a high-pressure mercury lamp (2 kW). The monomer compositions were exposed to the UV light for 15 minutes, so that the monomer compositions were polymerized. Subsequently, the male and female molds were separated away from each other. The polymerized products formed of the monomer compositions according to the Examples 1-3 and 5 and the Comparative Example 1 were immersed in ethanol while the polymerized products formed of the monomer compositions according to the Examples 4 and 6 were immersed in ethoxyethanol, so that the contact lenses swollen with ethanol or ethoxyethanol were removed from the respective molds.

Saponification treatment

Each of the swollen contact lenses obtained as described above was immersed in 2 mL of 65% methanol aqueous solution containing 0.5N NaOH accommodated in a vial, and kept at room temperature for two hours for saponification. Thereafter, each contact lens was washed with water for a neutralization treatment to remove the NaOH therefrom. Further, the contact lens was put into a heat-resistant bottle filled with water. After the bottle has been capped, the contact lens in the bottle was subjected to high-pressure steam sterilization at 121° C for 20 minutes.

Water content

Each of the thus obtained contact lens which had been subjected to the high-pressure steam sterilization described above was immersed in water kept at 200 °C for two hours. Subsequently, the contact lens was wiped with moisture-absorbing paper to remove redundant aqueous component therefrom. The weight ($W_1$) of the contact lens in its water-absorbing state was measured. Subsequently, the contact lens was left in a drier kept at 60 °C overnight. The weight ($W_2$) of the contact lens in its dry state was measured. Based on the weight ($W_1$) of the contact lens in the water-absorbing state and the weight ($W_2$) of the contact lens in the dry state, the water content was calculated according to the following equation (I):

$$\text{Water content (wt.\%)} = [(W_1 - W_2)/W_1] \times 100 \qquad\qquad (I)$$

Evaluation of dimensional stability and transparency

(A) Test 1..... three cycles of freezing-thawing operation

Each of the contact lenses (according to the Examples 1-6 and the Comparative Example 1) which had been subjected to the high-pressure steam sterilization was immersed in water kept at 20 °C for two hours. The size ($S_1$) of the contact lens was measured. Subsequently, the contact lens was put into a vial filled with water, so that the contact lens was immersed in water. In this state, the vial was left in a freezer kept at -30°C over night, whereby the contact lens was frozen. Thereafter, the frozen contact lens in the vial was immersed in water kept at 20 °C for eight hours, so that the contact lens was thawed. This freezing-thawing operation was repeated three times.

Each of the contact lenses which had been subjected to three cycles of the freezing-thawing operation was immersed in water kept at 20°C for two hours. In this state, the size ($S_2$) of the contact lens was measured. Based on the size ($S_1$) before the contact lens is subjected to three cycles of the freezing-thawing operation and the size ($S_2$) after the contact lens has been subjected to three cycles of the freezing-thawing operation, the ratio of a dimensional change of each contact lens was calculated according to the following equation (II). The ratio of the dimensional change for each contact lens is indicated in the following TABLE 2, together with the size ($S_1$) and the size ($S_2$).

$$\text{Ratio of dimensional change (\%)} = [(S_2 - S_1)/S_1] \times 100 \qquad \text{(II)}$$

Each of the contact lenses which had been subjected to three cycles of the freezing-thawing operation was visually observed, so as to evaluate the transparency of the contact lens. The symbol "○" in the TABLE 2 indicates that the contact lens was transparent without any whitening or clouding. The symbol "×" in the TABLE 2 indicates that the contact lens suffered from whitening or clouding.

(B) Test 2 Storage at low temperature (1°C-9°C) for a long period (three months)

Each of the contact lenses (according to the Examples 1-4) which had been subjected to the above-described Test 1 was put into a vial filled with water. Each of the contact lens accommodated in the vial was stored at a temperature of 5°C for three months. After the three-month storage, the contact lens was immersed in water kept at 20°C for two hours. Then, the size ($S_3$) of each contact lens was measured. Based on the size ($S_2$) before the three-month storage and the size ($S_3$) after the three-month storage, a ratio of a dimensional change was calculated according to the following equation (III). The calculated ratio of the dimensional change for each contact lens is indicated in the TABLE 2, together with the size ($S_3$).

$$\text{Ratio of dimensional change (\%)} = [(S_3 - S_2)/S_2] \times 100 \qquad \text{(III)}$$

Each of the contact lenses after the three-month storage was visually observed, so as to evaluate the transparency of the contact lens. The symbol "○" in the TABLE 2 indicates that the contact lens was transparent without any whitening or clouding. The symbol "×" in the TABLE 2 indicates that the contact lens suffered from whitening or clouding.

## TABLE 2

| | | Water content [%] | Test 1 | | | | Test 2 | | |
|---|---|---|---|---|---|---|---|---|---|
| | | | $S_1$ [mm] | $S_2$ [mm] | Dimensional change ratio [%] | Transparency | $S_3$ [mm] | Dimensional change ratio [%] | Transparency |
| Example | 1 | 85 | 18.0 | 17.9 | − 0.6 | ○ | 17.9 | ± 0.0 | ○ |
| | 2 | 77 | 18.5 | 18.6 | + 0.5 | ○ | 18.6 | ± 0.0 | ○ |
| | 3 | 64 | 13.8 | 13.9 | + 0.7 | ○ | 13.9 | ± 0.0 | ○ |
| | 4 | 78 | 16.8 | 16.7 | − 0.6 | ○ | 16.8 | + 0.6 | ○ |
| | 5 | 77 | 15.8 | 15.7 | − 0.6 | ○ | 15.7 | ± 0.0 | ○ |
| | 6 | 74 | 14.0 | 14.0 | ± 0.0 | ○ | 14.0 | ± 0.0 | ○ |
| * | 1 | 87 | 18.2 | 17.0 | − 6.6 | × | | | |

*: Comparative Example

It is apparent from the results indicated in the above TABLE 2 that the contact lenses (according to the Examples 1-4 of the present invention) given by the cross-linked vinyl alcohol-allyl alcohol copolymers which include the allyl alcohol unit, together with the vinyl alcohol unit, exhibit excellent dimensional stability without a substantial change in the size and excellent transparency without suffering from whitening or clouding after those contact lenses have been subjected to three cycles of the freezing-thawing operation described above or the contact lenses have been exposed to the low temperature for a long period.

In contrast, it is apparent from the results indicated in the TABLE 2 that the contact lens (according to the Comparative example) given by the cross-linked vinyl alcohol copolymer without including the allyl alcohol unit is not suitable for practical use at the low temperature environment.

Further, as is apparent from the results indicated in the TABLE 2, the contact lenses (according to the Examples 5 and 6 of the present invention) given by the cross-linked vinyl alcohol-halogenated-alkyl ethylene copolymers that include the halogenated-alkyl ethylene unit, together with the vinyl alcohol unit do not suffer from a reduction in the size and whitening or clouding after the contact lenses have been subjected to the low temperature for a long period.

**Claims**

1. A highly water-absorptive ophthalmic lens which is formed of a macromolecular material including vinyl alcohol unit as a major component and whose water content is in a range of 50-90 %, **characterized in that**:

    the macromolecular material is a cross-linked vinyl alcohol-allyl alcohol/halogenated-alkyl ethylene copolymer which includes allyl alcohol unit and/or halogenated-alkyl ethylene unit, together with the vinyl alcohol unit; and
    the ophthalmic lens has a ratio of a dimensional change of less than ±2 % and being free from whitening after (A) the ophthalmic lens has been subjected to three cycles of a freezing-thawing operation wherein the ophthalmic lens formed of the macromolecular material is left at a temperature of not higher than -10°C for not less than twelve hours, and is subsequently left at a temperature in a range from 15°C to 30°C for not less than six hours, and/or (B) the ophthalmic lens has been kept at a temperature in a range from 1°C to 9°C for three months.

2. A highly water-absorptive ophthalmic lens according to claim 1, wherein the macromolecular material is formed by saponifying a copolymer obtained by copolymerization of a first polymerizable monomer composition that includes, as essential components, vinyl carboxylate, allyl carboxylate, and a crosslinking monomer which is not decomposed by saponification.

3. A highly-absorptive ophthalmic lens according to claim 2, wherein the allyl carboxylate and the crosslinking monomer are included in the first polymerizable monomer composition in an amount of 0.001-0.8 mol and 0.0005-0.3 mol, respectively, per 1 mol of the vinyl carboxylate.

4. A highly water-absorptive ophthalmic lens according to claim 2 or 3, wherein the vinyl carboxylate is selected from the group consisting of mono-vinyl ester of monobasic carboxylic acid, di-vinyl ester of dibasic carboxylic acid, and mono-, di-, or poly-vinyl ester of polybasic carboxylic acid each of which has a molecular weight in a range from 86 to 1000.

5. A highly water-absorptive ophthalmic lens according to any one of claims 2 to 4, wherein the allyl carboxylate is poly-allyl ester of polybasic carboxylic acid wherein at least two carboxyl groups of polybasic carboxylic acid are esterified.

6. A highly water-absorptive ophthalmic lens according to any one of claims 2 to 5, wherein the first polymerizable monomer composition further includes 0.5-40 parts by weight of a lens-strength improving component for improving a strength of the ophthalmic lens, per 100 parts by weight of the total amount of the vinyl carboxylate, the allyl carboxylate, and the crosslinking monomer, the lens-strength improving component being copolymerizable with the vinyl carboxylate.

7. A highly water-absorptive ophthalmic lens according to claim 6, wherein the lens-strength improving component is a macromonomer having at least one polymerizable group per molecule on an average and obtained by copolymerizing a monomer composition that includes, as major components, alkyl (meth)acrylate monomer and a monomer having at least two polymerizable groups per molecule.

8. A highly water-absorptive ophthalmic lens according to claim 1, wherein the macromolecular material is formed by saponifying a copolymer obtained by copolymerization of a second polymerizable monomer composition that includes, as essential components, vinyl carboxylate, halogenated-alkyl ethylene, and a crosslinking monomer which is not decomposed by saponification.

9. A highly water-absorptive ophthalmic lens according to claim 8, wherein the halogenated-alkyl ethylene and the crosslinking monomer are included in the second polymerizable monomer composition in an amount of 0.0001-0.5 mol and 0.0005-0.3 mol, respectively, per 1 mol of the vinyl carboxylate.

10. A highly water-absorptive ophthalmic lens according to claim 8 or 9, wherein the vinyl carboxylate is selected from the group consisting of mono-vinyl ester of monobasic carboxylic acid, di-vinyl ester of dibasic carboxylic acid, and mono-, di-, or poly-vinyl ester of polybasic carboxylic acid each of which has a molecular weight in a range from 86 to 1000.

11. A highly water-absorptive ophthalmic lens according to any one of claims 8 to 10, wherein the halogenated-alkyl ethylene is perfluoroalkyl ethylene wherein all hydrogen atoms in the alkyl group thereof are substituted with fluorine atoms.

12. A method of producing a highly water-absorptive ophthalmic lens according to claim 1, comprising the steps of :

preparing a first polymerizable monomer composition which at least includes allyl carboxylate and a crosslinking monomer which is not decomposed by saponification, together with vinyl carboxylate;
introducing the first polymerizable monomer composition into a mold cavity of a mold assembly which gives a configuration of an intended ophthalmic lens;
copolymerizing the first polymerizable composition by photo-polymerization or heat-polymerization to obtain a copolymer; and
saponifying the obtained copolymer, for converting vinyl carboxylate unit and allyl carboxylate unit into vinyl alcohol unit and allyl alcohol unit, respectively, so that the copolymer is made hydrophilic.

13. A method according to claim 12, wherein the mold assembly consists of a male mold and a female mold at least one of which is formed of a light-transmitting material, and the step of copolymerizing the first polymerizable composition is carried out by photo-polymerization of the first polymerizable composition which is introduced into the mold cavity defined by the male mold and the female mold.

14. A method of producing a highly water-absorptive ophthalmic lens according to claim 1, comprising the steps of:

preparing a second polymerizable monomer composition which at least includes vinyl carboxylate, halogenated-alkyl ethylene, and a crosslinking monomer which is not decomposed by saponification;
introducing the second polymerizable monomer composition into a mold cavity of a mold assembly which gives a configuration of an intended ophthalmic lens;
copolymerizing the second polymerizable composition by photo-polymerization or heat-polymerization to obtain a copolymer; and
saponifying the obtained copolymer, for converting vinyl carboxylate unit into vinyl alcohol unit, so that the copolymer is made hydrophilic.

15. A method according to claim 14, wherein the mold assembly consists of a male mold and a female mold at least one of which is formed of a light-transmitting material, and the step of copolymerizing the second polymerizable composition is carried out by photo-polymerization of the second polymerizable composition which is introduced into the mold cavity defined by the male mold and the female mold.

## EUROPEAN SEARCH REPORT

**European Patent Office**

Application Number

EP 03 25 3212

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 98 04934 A (NOVARTIS AG) 5 February 1998 (1998-02-05) * page 4, paragraph 6 - page 5, paragraph 1 * * page 8, paragraph 5 - page 9, paragraph 4 * * page 16, paragraph 3 - paragraph 5 * * page 17, paragraph 3 - page 19, paragraph 5; claims 1-10 * --- | 1-15 | C08F8/12 G02B1/04 |
| Y | DATABASE WPI Section Ch, Week 200065 Derwent Publications Ltd., London, GB; Class A89, AN 2000-667405 XP002253709 & JP 2000 248003 A (SUMITOMO ELECTRIC IND CO), 12 September 2000 (2000-09-12) * abstract * --- | 1-15 | |
| Y | EP 0 962 511 A (MERCK PATENT GMBH) 8 December 1999 (1999-12-08) * column 1, line 7 - line 30 * * column 3, line 23 - line 40 * * column 5, line 39 - line 52; claims 1-8 * --- | 1-15 | **TECHNICAL FIELDS SEARCHED** (Int.Cl.7) C08F G02B |
| A | DATABASE WPI Section Ch, Week 200204 Derwent Publications Ltd., London, GB; Class E36, AN 2002-026793 XP002253710 & CN 1 304 050 A (SHANXI COAL CHEM ACAD SINICA), 18 July 2001 (2001-07-18) * abstract * --- -/-- | 1 | |

The present search report has been drawn up for all claims

| Place of search | Date of completion of the search | Examiner |
|---|---|---|
| THE HAGUE | 8 September 2003 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

European Patent
Office

**EUROPEAN SEARCH REPORT**

Application Number

EP 03 25 3212

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 200108<br>Derwent Publications Ltd., London, GB;<br>Class A25, AN 2001-069031<br>XP002253711<br>& NZ 334 977 A (NOVARTIS AG),<br>29 September 2000 (2000-09-29)<br>* abstract *<br>----- | 1 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 8 September 2003 | Permentier, W |

EPO FORM 1503 03.82 (P04C01)

## ANNEX TO THE EUROPEAN SEARCH REPORT
## ON EUROPEAN PATENT APPLICATION NO.

EP 03 25 3212

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2003

| Patent document cited in search report | | Publication date | Patent family member(s) | | Publication date |
|---|---|---|---|---|---|
| WO 9804934 | A | 05-02-1998 | AT | 214810 T | 15-04-2002 |
| | | | AU | 3771297 A | 20-02-1998 |
| | | | DE | 69711236 D1 | 25-04-2002 |
| | | | DE | 69711236 T2 | 02-10-2002 |
| | | | WO | 9804934 A1 | 05-02-1998 |
| | | | EP | 0951654 A1 | 27-10-1999 |
| | | | JP | 2000515822 T | 28-11-2000 |
| | | | US | 6106746 A | 22-08-2000 |
| | | | ZA | 9706639 A | 26-01-1998 |
| JP 2000248003 | A | 12-09-2000 | NONE | | |
| EP 962511 | A | 08-12-1999 | DE | 19825100 A1 | 16-12-1999 |
| | | | EP | 0962511 A1 | 08-12-1999 |
| | | | JP | 2000080331 A | 21-03-2000 |
| | | | KR | 2000005904 A | 25-01-2000 |
| | | | US | 6296793 B1 | 02-10-2001 |
| | | | US | 2001033893 A1 | 25-10-2001 |
| CN 1304050 | A | 18-07-2001 | NONE | | |
| NZ 334977 | A | 29-09-2000 | NONE | | |

EPO FORM P0459

For more details about this annex : see Official Journal of the European Patent Office, No. 12/82